Europäisches Patentamt

European Patent Office

Office européen des brevets

(19)

(11) Veröffentlichungsnummer: **0 086 369**
**A1**

(12) # EUROPÄISCHE PATENTANMELDUNG

(21) Anmeldenummer: 83100672.1

(22) Anmeldetag: 26.01.83

(51) Int. Cl.³: **G 08 B 13/18, G 01 J 5/34**

(30) Priorität: 12.02.82 CH 884/82

(43) Veröffentlichungstag der Anmeldung: 24.08.83
Patentblatt 83/34

(84) Benannte Vertragsstaaten: DE FR GB

(71) Anmelder: CERBERUS AG, Alte Landstrasse 411,
CH-8708 Männedorf (CH)

(72) Erfinder: Wägli, Peter, Dr., Dipl.-Phys.,
Curtibergstrasse 62, CH-8646 Jona-Wagen (CH)
Erfinder: Marshall, Robert Hunter, Herweg 20,
CH-8708 Männedorf (CH)

(74) Vertreter: Tiemann, Ulrich, Dr.-Ing., c/o Cerberus AG
Patentbüro Alte Landstrasse 411, CH-8708 Männedorf
(CH)

(54) **Infrarot-Einbruchdetektor mit pyroelektrischem Strahlungsempfänger.**

(57) Die Nahempfindlichkeit eines IR-Einbruchdetektors mit pyroelektrischem Strahlungsempfänger, der aus zwei in Reihe oder parallel geschalteten, umgekehrt gepolten Sensorelementen (1, 2) besteht, wird ohne Beeinträchtigung der Fehlalarmunterdrückung dadurch erheblich verbessert, dass parallel oder in Reihe zu einem der beiden Sensorelemente (1, 2) ein induktives oder kapazitives Glied angeordnet wird.

Infrarot-Einbruchdetektor mit pyroelektrischem Strahlungsempfänger

Die Erfindung betrifft einen Infrarot-Einbruchdetektor mit
pyroelektrischem Strahlungsempfänger zur Detektion eines in
dessen Detektionsbereich eindringenden Körpers, der eine von
seiner Umgebung abweichende Temperatur besitzt, mit einer
Optik zur Fokussierung der von diesem Körper ausgehenden IR-
Strahlung, mit einem aus zwei in Reihe geschalteten, umgekehrt gepolten Sensorelementen bestehenden Differentialsensor, mit einer einen Feldeffekttransistor als Verstärkerelement aufweisenden Impedanzumwandlungsschaltung und einer Auswerteschaltung zur Alarmsignalgabe.

Ein solcher Einbruchdetektor ist aus der US-PS 3'389'640 bekannt; er spricht auf die Temperaturdifferenz zwischen der
Umgebungstemperatur und der Körpertemperatur eines Eindringlings, der sich am Detektor vorbeibewegt, an. Das Zusammenwirken von Körpertemperatur und Körperbewegung bringt den
Differentialsensor aus dem Gleichgewicht und löst ein Alarmsignal aus.

Da die pyroelektrischen Strahlungsempfänger im allgemeinen
eine elektrische Kapazität und eine hohe Innenimpedanz aufweisen, werden diese Pyrodetektoren mit einem Schaltkreis
angewendet, bei dem als Impedanzwandler ein Feldeffekttransistor dient.

Da passive IR-Detektoren auf die durch einen sich bewegenden
Körper verursachte Strahlungsänderung ansprechen, sind diese
Detektoren empfindlich gegenüber allen Störungen, die durch
Temperaturschwankungen des Detektionsbereichs oder durch Wärmestrahlung, die auf den Melder, insbesondere das Strahlungseintrittsfenster, auftrifft, verursacht werden. Sie sind
z.B. auch empfindlich gegenüber Luftturbulenzen aus Heizungen oder Lüftungen. Bei den zur Unterdrückung dieser Störungen verwendeten Differentialsensoren werden durch die Optik zwei benachbarte Zonen geschaffen, die sich im Nahbereich überlappen. Diese Signale heben sich am Impedanzwandler auf und die Temperaturschwankungen auf dem Fenster werden unterdrückt.

Zur Verbesserung der Nahempfindlichkeit wurde bereits vorgeschlagen (GB-A 2'034'115 und US-PS 3'453'432) nur eine oder
nur einen Teil einer der beiden Elektrodenflächen der Strahlung auszusetzen, wodurch vorwiegend die Temperaturschwankungen des Detektorgehäuses aufgehoben werden. Zum Ausgleich
der Temperaturschwankungen des Strahlungseintrittsfensters
des Melders war dies jedoch nicht ausreichend.

In der EP-A 23'354 wird ein Pyrodetektor vorgeschlagen, bei
dem zustäzlich zu einem im Fokus eines Hohlspiegels angebrachten Sensor ein weiterer Sensor ausserhalb des Fokus angebracht ist, wodurch nur der Nahbereich auf beide Sensoren
abgebildet wird. Zur Verbesserung der Nahempfindlichkeit und
Verringerung der Störanfälligkeit durch IR-Strahlung, die
von der Abdeckung des Hohlspiegels ausgeht, müssten die beiden Sensoren einen gewissen Abstand voneinander aufweisen.
Aus konstruktiven Gründen sollten jedoch die beiden Sensoren
möglichst nahe beeinander oder sogar auf demselben Chip angeordnet sein. Zumindest sollten sie aber in demselben Gehäuse
untergebracht sein, um ein möglichst kleines IR-Filter zu
ermöglichen. Daher ergibt die vorgeschlagene Lösung keine
wesentliche Verbesserung der Nahempfindlichkeit der vorbekannten Detektoren. Werden die Detektoren weit auseinandergelegt, ergibt sich eine unhandliche Optik. Andererseits wird aufgrund der unterschiedlichen optischen Abbildung auf die beiden Sensoren die Fehlalarmunterdrückung schlecht.

Der Erfindung liegt die Aufgabe zu Grunde, die erwähnten Nachteile der IR-Einbruchdetektoren des Standes der Technik zu beseitigen und insbesondere einen IR-Einbruchdetektor mit Pyrodetektor zu schaffen, der bei guter Fehlalarmunterdrükkung mit einfachen Mitteln eine verbesserte Empfindlichkeit im Nahbereich aufweist.

Dies wird erfindungsgemäss dadurch erreicht, dass die Impedanzumwandlungsschaltung Schaltelemente aufweist, welche den Frequenzgang des einen Sensorelementes so beeinflussen, dass von IR-Strahlung, welche beide Sensorelemente gleichzeitig beaufschlagt, beorzugt solche ein Signal am Ausgang des Impedanzwandlers bewirkt, welche eine schnelle Aenderung des Signalpegels aufweist.

Gemäss einer bevorzugten Ausführungsform werden die Schaltungselemente so gewählt, dass bevorzugt solche IR-Strahlung ein Signal am Ausgang des Impedanzwandlers bewirkt, deren Signalpegel eine Frequenz von mehr als 0,5 Hz, insbesondere von 0,75 Hz, besonders bevorzugt von 1 Hz aufweist.

Gemäss einer Ausgestaltung des erfindungsgemässen Detektors wird in der Impedanzumwandlungsschaltung parallel oder in Reihe zu einem der beiden Sensorelemente ein induktives oder ein kapazitives Glied angeordnet, wobei die Kapazität des kapazitiven Gliedes von der gleichen Grössenordnung wie die Kapazität des Sensorelementes ist.

Im folgenden werden bevorzugte Ausführungsformen der Erfindung im Vergleich zum Stand der Technik an Hand der Zeichnungen näher erläutert. Es zeigen

Figur 1 eine Schaltungsanordnung für einen Pyrodetektor des Standes der Technik.
Figur 2 die Ausgangssignale des Detektors gemäss Figur 1 in einem Abstand von 3 m vom Detektor.
Figur 3 ein Turbulenz-Spektrum
Figur 4 mehrer Beispiele für Schaltungsanordnungen für ein IR-Einbruchdetektor gemäss vorliegender Erfindung und
Figur 5 das differentielle Signal eines IR-Einbruchdetektors als Funktion der Frequenz für verschiedene Kapazitätswerte des kapazitiven Gliedes.

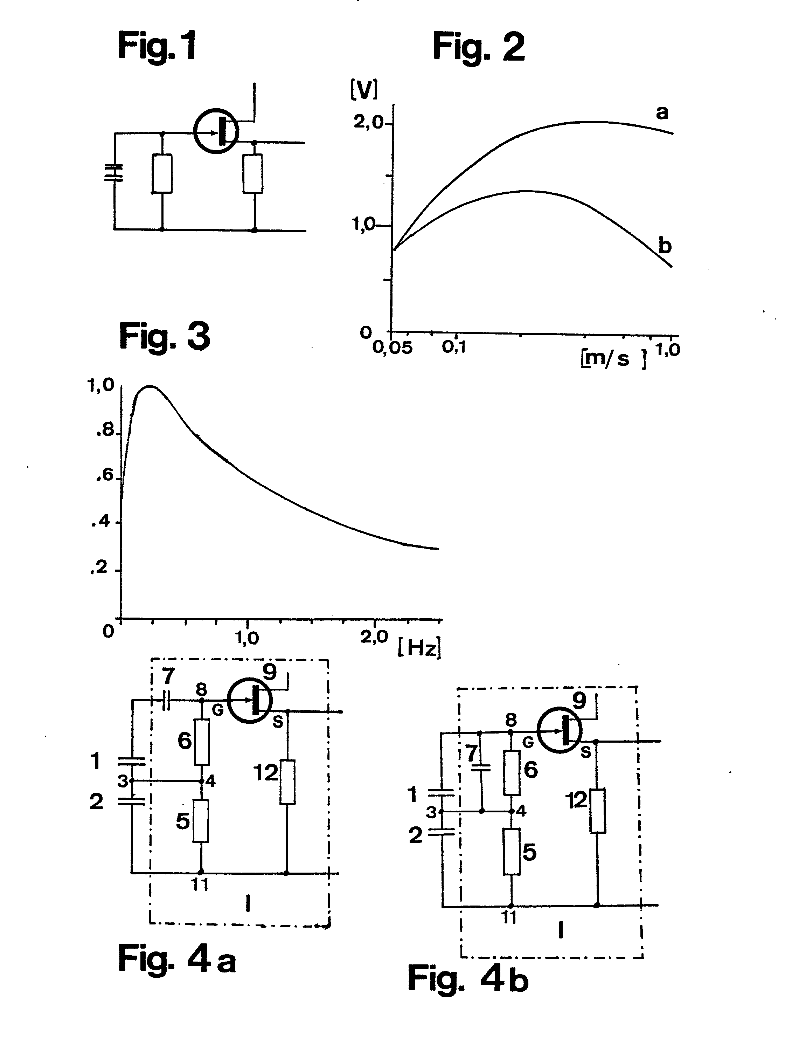

Figur 1 zeigt eine Schaltungsanordnung für einen IR-Einbruchdetektor mit pyroelektrischem Strahlungsempfänger des Standes der Technik. An dem Widerstand zwischen der Source-Elektrode des FET und der Erde kann das zur Alarmsignalgabe dienende Signal abgenommen werden.

In Figur 2 sind die Ausgangssignale eines IR-Einbruchdetektors des Standes der Technik als Funktion der Geschwindigkeit eines sich in 3 m Abstand vom Detektor bewegenden Objekts aufgetragen. Die Kurve (a) stellt das Signal eines einfachen Detektors dar, Kurve (b) ist das Signal eines Detektors mit einer Schaltungsanordnung gemäss Figur 1. Es zeigt sich, dass die Empfindlichkeit von Differentialsensoren mit zunehmender Geschwindigkeit stark abnimmt.

In Figur 3 ist ein Turbulenz-Spektrum angegeben. Es ist die Amplitude in Abhängigkeit von der Frequenz aufgetragen. Die Amplitude zeigt ein scharfes Maximum bei tiefen Frequenzen (0,25 Hz).

Es ergibt sich, dass eine gute Differenzierung nur bei tiefen Frequenzen erforderlich ist, bei hohen Frequenzen kann der Detektor unbalanciert sein. Dies kann durch eine der in den Figuren 4a bis 4c angegebenen Schaltungsanordnungen erreicht werden.

Figur 4a zeigt eine Schaltungsanordnung, bei welcher der den Frequenzgang des Differentialsensors beeinflussende Kondensator in Reihe mit dem Sensorelement angeordnet ist. Das Sensorelement ist ein aus zwei in Reihe geschalteten umgekehrt gepolten Sensorelementen 1, 2 bestehender Differentialsensor, dem eine Impedanzumwandlungsschaltung I nachgeordnet ist. Die Impedanzumwandlungsschaltung I weist parallel zum Differentialsensor 1, 2 zwei in Reihe geschaltete Widerstände 5, 6 auf, deren Verbindungspunkt 4 mit dem Verbindungspunkt 3 der beiden Sensorelemente 1, 2 verbunden ist und deren einer Endpunkt 11 mit dem einen Pol des Differentialsensors 1, 2 verbunden ist und deren anderer Endpunkt 8 einerseits über einen Kondensator 7, dessen Kapazität von der gleichen Grössenordnung wie die Kapazität des Sensorelementes 1 ist, mit dem anderen Pol des Differentialsensors 1, 2 verbunden ist und andererseits mit der Gate-Elektrode G eines als Impedanzwandler dienenden Feldeffekttransistor 9 verbunden ist. Das Ausgangssignal $\Delta$s der Impedanzumwandlungsschaltung I wird über einem zwischen die Source-Elektrode S und den Endpunkt 11 des Widerstands 5 geschalteten Widerstand 12 abgenommen.

Die in Figur 4b dargestellte Schaltungsanordnung unterscheidet sich von der Schaltungsanordnung gemäss Figur 4a lediglich dadurch, dass der Kondensator 7, dessen Kapazität ebenfalls von der gleichen Grössenordnung wie die Kapazität des Sensorelements 1 ist, nicht in Reihe zum Sensorelement 1, d.h. zwischen Sensorelement 1 und Gate-Elektrode G des Feldeffekttransistors 9 geschaltet ist, sondern sich parallel zum Sensorelement 1 zwischen dem einen Endpunkt 8 der Widerstände 5, 6 und dem Verbindungspunkt 3 der beiden Sensorelemente 1, 2 befindet.

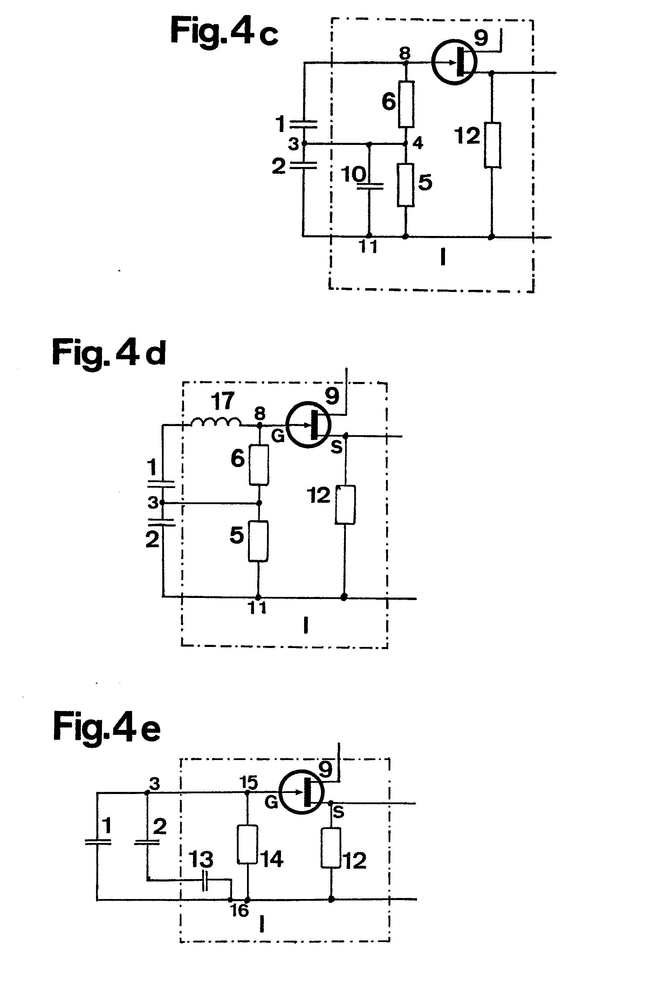

In der in der Figur 4c dargestellten Schaltungsanordnung ist die dritte Ausführungsform verwirklicht, bei welcher ein Kondensator 10, dessen Kapazität von der gleichen Grössenordnung wie die Kapazität des Sensorelementes 2 ist, parallel zum Sensorelement 2 angeordnet ist, d.h. sich zwischen dem Verbindungspunkt 3 der beiden Sensorelemente 1, 2 und dem anderen Endpunkt 11 der beiden Widerstände 5, 6 befindet.

Anstelle der vorstehend beschriebenen Ausführungsformen der Erfindung können mit gleichem Erfolg Schaltungen verwendet werden, bei denen anstelle der Kondensatoren 7 und 10 jeweils induktive Glieder eingesetzt werden.

In Figur 4d ist eine solche Schaltung dargestellt. Sie entspricht genau der Schaltung gemäss Figur 4b, wobei in Reihe zum Sensorelement 1, d.h. zwischen diesem und der Gate-Elektrode G des Feldeffektransistors 9 ein induktives Glied 17 eingeschaltet ist, dessen Impedanz von der gleichen Grössenordung wie diejenige der Sensorelemente 1, 2.

Eine weitere Ausgestaltung der Schaltungsanordnung eines Impedanzwandlers I eines erfindungsgemässen IR-Einbruchdetektors besteht darin, die beiden umgekehrt gepolten Sensorelemente 1, 2 nicht in Reihe sondern parallel anzuordnen. Diese Schaltungsanordnung ist in Figur 4e dargestellt. Die beiden umgekehrt gepolten Sensorelemente 1, 2 sind parallel zueinander und parallel zu einem Widerstand 14 angeordnet, wobei sich zwischen dem einen Sensorelement 2 und dem Verbindungspunkt 16 des einen Endes des Widerstandes 14 und dem anderen
Sensorelement 1 ein Kondensator 13 (oder ein induktives
Glied), dessen Kapazität von der gleichen Grössenordnung wie
die Kapazität des Sensorelementes 2 ist, befindet. Der Verbindungspunkt 3 der beiden Sensorelemente 1, 2 und der andere Endpunkt 15 des Widerstandes 14 sind mit der Gate-Elektrode G eines als Impedanzwandler dienenden Feldeffekttransistor 9 verbunden. Das Ausgangssignal $\Delta s$ der Impedanzumwandlungsschaltung I wird über einen zwischen die Source-Elektrode S und den Endpunkt 16 des Widerstandes 14 geschalteten
Widerstand 12 abgenommen.

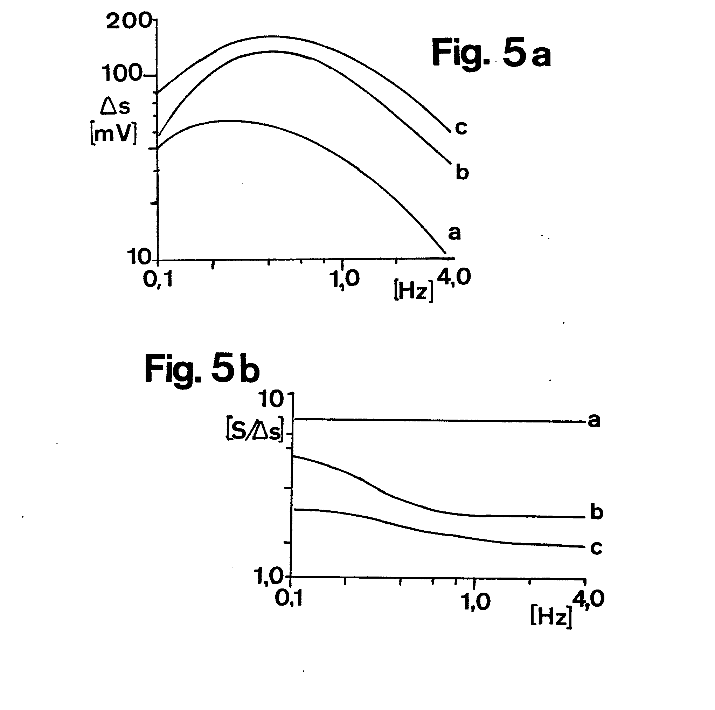

In Figur 5a ist das differentielle Signal $\Delta s$ am Ausgang der
Impedanzumwandlungsschaltung I gemäss Figur 4c eines IR-Einbruchdetektors für verschiedene Kapazitätswerte des Kondensators 10 aufgetragen. Auf der Ordinate ist in logarithmischer Darstellung der Signalpegel in mV angegeben, während
auf der Abszisse, ebenfalls in logarithmischer Darstellung
die Frequenz in Hz angegeben ist. Die Stärke des Signals wurde mit einem Detektor gemessen, der sich in einem Abstand
von 50 cm von der IR-Strahlungsquelle befand (Strahlungsquelle: schwarzer Strahler auf T = 400 K).

Als Detektor diente ein $LiTaO_3$-Kristall mit einer Kapazität
von 8 pF für die differentiellen Sensorelemente 1, 2. Die
Widerstände 5 und 6 weisen je 30 G$\Omega$ auf. Die Kurve a) wurde
ohne Zusatzkondensator 10 aufgenommen, während die Kurve b)
mit einem Kondensator 10 mit einer Kapazität von 6pF aufgenommen wurde; die Kurve c) wurde mit demselben Detektor jedoch zum Vergleich mit einem Kondensator 10 mit einer Kapazität von 10 pF aufgenommen. Man erkennt, dass der Detektor
nur im relevanten tiefen Freqeuenzbereich differenziert. Besonders deutlich wird das, wenn man das Verhältnis S/ $\Delta s$ (di-

mensionslose Zahl) gegen die Frequenz aufträgt (vgl. Figur 5b). S ist dabei das Signal, das am Ausgang der Impedanzumwandlungsschaltung I erhalten wird, wenn das Sensorelement 2 in Figur 4c abgedeckt wird.

Anstelle der Widerstände 5 und 6 können Schaltelemente eingesetzt werden, deren ohmscher Widerstand gleich ist, deren Kapazität jedoch verschieden sein muss, z.B. Dioden, deren eingebaute Kapazität des p-n-Uebergangs ausgenutzt wird.

Durch die Schaltungsanordnung gemäss vorliegender Erfindung kann die Empfindlichkeit im Nahbereich beträchtlich gesteigert werden, ohne dass die Unterdrückung von Fehlalarmen beeinträchtigt wird.

Patentansprüche

1. Infrarot-Einbruchdetektor mit pyroelektrischem Strahlungsempfänger zur Detektion eines in dessen Detektionsbereich
eindringenden Körpers, der eine von seiner Umgebung abweichende Temperatur besitzt, mit einer Optik zur Fokussierung der von diesem Körper ausgehenden IR-Strahlung, mit
einem aus zwei in Reihe oder parallel geschalteten, umgekehrt gepolten Sensorelementen (1, 2) bestehenden Differentialsensor, mit einer einen Feldeffekttransistor (9)
als Verstärkerelement aufweisenden Impedanzumwandlungsschaltung (I) und einer Auswerteschaltung zur Alarmsignalgabe, dadurch gekennzeichnet, dass die Impedanzumwandlungsschaltung (I) Schaltelemente (7, 10) aufweist, welche den Frequenzgang des einen Sensorelementes (1, 2)
so beeinflussen, dass von IR-Strahlung, welche beide Sensorelemente (1, 2) gleichzeitig beaufschlagt, bevorzugt
solche ein Signal am Ausgang des Impedanzwandlers (9)
bewirkt, welche eine schnelle Aenderung des Signalpegels
aufweist.

2. Infrarot-Einbruchdetektor gemäss Patentanspruch 1, dadurch
gekennzeichnet, dass die Schaltelemente (7, 10) so eingerichtet sind, dass sie den Frequenzgang des einen Sensorelementes (1, 2) so beeinflussen, dass von IR-Strahlung,
welche beide Sensorelemente (1, 2) gleichzeitig beaufschlagt, bevorzugt solche Strahlung ein Signal am Ausgang
des Impedanzwandlers (9) bewirkt, welche eine Frequenz
des Signalpegels von mehr als 0,5 Hz, vorzugsweise von
mehr als 0,75 Hz, insbesondere von mehr als 1 Hz, aufweist.

3.  IR-Einbruchdetektor gemäss einem der Patentansprüche 1
    und 2, dadurch gekennzeichnet, dass die beiden umgekehrt
    gepolten Sensorelemente (1, 2) in Reihe geschaltet sind
    und dass in der Impedanzumwandlungsschaltung (I) parallel
    oder in Reihe zu einem der beiden Sensorelemente (1, 2)
    ein induktives Glied angeordnet ist.

4.  IR-Einbruchdetektor gemäss einem der Patentansprüche 1
    und 2, dadurch gekennzeichnet, dass die beiden umgekehrt
    gepolten Sensorelemente (1, 2) in Reihe geschaltet sind
    und dass in der Impedanzumwandlungsschaltung (I) parallel
    oder in Reihe zu einem der beiden Sensorelemente (1, 2)
    ein kapazitives Glied (7, 10) angeordnet ist, das eine
    Kapazität von der gleichen Grössenordnung wie die Kapazität des Sensorelementes (1, 2) aufweist.

5.  IR-Einbruchdetektor gemäss einem der Patentansprüche 1
    und 2, dadurch gekennzeichnet, dass die beiden umgekehrt
    gepolten Sensorelemente (1, 2) in Reihe geschaltet sind
    und dass die Impedanzumwandlungsschaltung (I), zwei in
    Reihe geschaltete Widerstände (5, 6), deren Verbindungspunkt (4) mit dem Verbindungspunkt (3) der beiden Sensorelemente (1, 2) verbunden ist, deren einer Endpunkt (11)
    mit dem einen Pol des Differentialsensors (1, 2) verbunden
    ist und deren anderer Endpunkt (8) einerseits über einen
    Kondensator (7), dessen Kapazität von der gleichen Grössenordnung wie die Kapazität des Sensorelementes (1) ist,
    mit dem anderen Pol des Differentialsensors (1, 2) verbunden ist und andererseits mit der Gate-Elektrode (G) eines
    als Impedanzwandler dienenden Feldeffekttransistors (9) verbunden ist, aufweist, wobei das Ausgangssignal der Impedanzumwandlungsschaltung (I) über einem zwischen die Source-Elektrode (S) und den Endpunkt (11) des Widerstands (5) geschalteten Widerstand (12) abgenommen wird.

6.  IR-Einbruchdetektor gemäss einem der Patentansprüche 1 und 2, dadurch gekennzeichnet, dass die beiden umgekehrt gepolten Sensorelemente (1, 2) in Reihe geschaltet sind und dass die Impedanzumwandlungsschaltung (I) zwei in Reihe geschaltete Widerstände (5, 6), deren Verbindungspunkt (4) mit dem Verbindungspunkt (3) der beiden Sensorelemente (1, 2) verbunden ist, deren einer Endpunkt (11) mit dem einen Pol des Differentialsensors (1, 2) verbunden ist und deren anderer Endpunkt (8) mit dem anderen Pol des Differentialsensors (1, 2), mit der Gate-Elektrode (G) eines als Impedanzwandler dienenden Feldeffektransistors (9) und über einen Kondensator (7), dessen Kapazität von der gleichen Grössenordnung wie die Kapazität des Sensorelementes (1) ist, mit dem Verbindungspunkt (3) der beiden Sensorelemente (1, 2) verbunden ist, aufweist, wobei das Ausgangssignal der Impedanzumwandlungsschaltung (I) über einem zwischen die Source-Elektrode (S) und den Endpunkt (11) des Widerstands (5) geschalteten Widerstand (12) abgenommen wird.

7.  IR-Einbruchdetektor gemäss einem der Patentansprüche 1 und 2, dadurch gekennzeichnet, dass die beiden umgekehrt gepolten Sensorelemente (1, 2) in Reihe geschaltet sind und dass die Impedanzumwandlungsschaltung (I) zwei in Reihe geschaltete Widerstände (5, 6) deren Verbindungspunkt (4) mit dem Verbindungspunkt (3) der beiden Sensorelemente (1, 2) verbunden ist, deren einer Endpunkt (8) einerseits mit dem einen Pol des Differentialsensors (1, 2), andererseits mit der Gate-Elektrode (G) eines als Impedanzwandler dienenden Feldeffekttransistors (9) verbunden ist, deren anderer Endpunkt (11) mit dem anderen Pol des Differentialsensors (1, 2) und über einen Kondensator (10), dessen Kapazität von der gleichen Grössenordnung ist wie die Kapazität des Sensorelementes (2), mit dem Verbindungspunkt (3) der beiden Sensorelemente (1, 2) verbunden ist, aufweist, wobei das Ausgangssignal der Impedanzumwandlungsschaltung (I) über einem zwischen die Source-Elektrode (S) des Feldeffekttransistors (9) und den Endpunkt (11) des Widerstands (5) geschalteten Widerstand (12) abgenommen wird.

8. IR-Einbruchdetektor gemäss einem der Patentansprüche 1 und 2, dadurch gekennzeichnet, dass die beiden umgekehrt gepolten Sensorelemente (1, 2) parallel geschaltet sind und dass in der Impedanzumwandlungsschaltung (I) in Reihe zu einem der beiden Sensorelemente ein induktives Glied (17) angeordnet ist.

9. IR-Einbruchdetektor gemäss einem der Patentansprüche 1 und 2, dadurch gekennzeichnet, dass die beiden umgekehrt gepolten Sensorelemente (1, 2) parallel geschaltet sind und dass in der Impedanzumwandlungsschaltung (I) in Reihe zu einem der beiden Sensorelemente ein kapazitives Glied (13) angeordnet ist, das eine Kapazität von der gleichen Grössenordnung wie die Kapazität des Sensorelementes (1, 2) aufweist.

10. IR-Einbruchdetektor gemäss einem der Patentansprüche 1 und 2, dadurch gekennzeichnet, dass die beiden umgekehrt gepolten Sensorelemente (1, 2) parallel geschaltet sind und dass die Impedanzumwandlungsschaltung (I) einen Widerstand (14), dessen einer Endpunkt (15) einerseits mit dem Verbindungspunkt (3) der beiden Sensorelemente (1, 2), andererseits mit der Gate-Elektrode (G) eines als Impedanzwandler dienenden Feldeffekttransistors (9) verbunden ist, dessen anderer Endpunkt (16) einerseits über einen Kondensator (13), dessen Kapazität von der gleichen Grössenordnung ist wie die Kapazität des Sensorelements (2), mit dem dem Verbindungspunkt (3) der beiden Sensorelemente (1, 2) entgegengesetzten Pol des Sensorelements (2), andererseits direkt mit dem dem Verbindungspunkt (3) entgegengesetzten Pol des Sensorelementes (1) verbunden ist, wobei das Ausgangssignal der Impedanzumwandlungsschaltung (I) über einen zwischen die Source-Elektrode (S) des Feldeffekttransistors (9) und den Endpunkt (16) des Widerstands (14) geschalteten Widerstand (12) abgenommen wird.

**Fig.1**

**Fig. 2**

**Fig. 3**

**Fig. 4 a**

**Fig. 4 b**

0086369

**Fig. 4 c**

**Fig. 4 d**

**Fig. 4 e**

Fig. 5a

Fig. 5b

0086369

**Europäisches Patentamt**

**EUROPÄISCHER RECHERCHENBERICHT**

0086369

Nummer der Anmeldung

EP 83 10 0672

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. 3) |
|---|---|---|---|
| A | EP-A-0 018 033 (PHILIPS ELECTRONIC AND ASSOCIATED INDUSTRIES LTD.) * Ansprüche * | 1,5-7, 10 | G 08 B 13/18 G 01 J 5/34 |
| A | US-A-3 631 434 (SCHWARTZ) * Spalte 1, Zeile 25 - Spalte 2, Zeile 54; Spalte 3, Zeile 64 - Spalte 4, Zeile 32; Figur 1 * | 1,2 | |
| A | US-A-4 225 786 (PERLMAN) * Zusammenfassung * | 1 | |
| A | US-A-3 928 843 (SPROUT et al.) | | |

---

|  |  |  | RECHERCHIERTE SACHGEBIETE (Int. Cl. 3) |
|---|---|---|---|
|  |  |  | G 08 B G 01 J H 01 L |

Der vorliegende Recherchenbericht wurde für alle Patentansprüche erstellt.

| Recherchenort DEN HAAG | Abschlußdatum der Recherche 19-05-1983 | Prüfer REEKMANS M.V. |
|---|---|---|